# EUROPÄISCHE PATENTSCHRIFT

(11) **EP 1 482 804 B1**
(45) Veröffentlichungstag und Bekanntmachung des Hinweises auf die Patenterteilung: **29.03.2006**
(21) Anmeldenummer: 02787403.1
(22) Anmeldetag: 25.11.2002
(51) Int. Cl.: A22C 13/00

(54) **WASSERDAMPF- UND RAUCHDURCHLÄSSIGE NAHRUNGSMITTELHÜLLE MIT RAUHER UND NATÜRLICHER OBERFLÄCHE**
WATER-VAPOUR AND SMOKE PERMEABLE FOOD CASING COMPRISING A ROUGH, NATURAL SURFACE
ENVELOPPE ALIMENTAIRE PERMEABLE A LA VAPEUR D'EAU ET A LA FUMEE PRESENTANT UNE SURFACE RUGUEUSE ET NATURELLE

(30) Priorität: 01.03.2002 DE 10208858
(43) Veröffentlichungstag der Anmeldung: 08.12.2004
(73) Patentinhaber: Kalle GmbH, 65025 Wiesbaden (DE)
(72) Erfinder: STALBERG, Stefanie, 65232 Taunusstein-Wehen (DE); FERON, Bernhard, 65189 Wiesbaden (DE); DELIUS, Ulrich, 60529 Frankfurt (DE); SCHMIDT, Michael, 65375 Oestrich-Winkel (DE)
(74) Vertreter: Plate, Jürgen
(86) Internationale Anmeldenummer: PCT/DE2002/004345
(87) Internationale Veröffentlichungsnummer: WO 2003/073861

(56) Entgegenhaltungen:
- EP-A- 0 826 731
- EP-A- 0 962 145
- WO-A-01/03508
- WO-A-02/00026
- WO-A-97/03113
- DE-A- 4 141 292
- DE-A- 10 125 207
- DE-A- 19 645 276

## Beschreibung

Die vorliegende Erfindung betrifft eine Nahrungsmittelhülle aus einem thermoplastischen Gemisch, das mindestens ein aliphatisches Polyamid und/oder Copolyamid und/oder mindestens ein Glykol- und/oder Polyglykol-Einheiten aufweisendes aliphatisches und/oderteilaromatisches Copolyamid umfaßt. Sie betrifft daneben ein Verfahren zu ihrer Herstellung und ihre Verwendung als künstliche Wursthülle.

Nahrungsmittelhüllen, speziell Wursthüllen, werden aus Naturdarm, Textil-, Faser- oder Cellulosedarm, Kollagen oder Kunststoff hergestellt. Der Kollagen- bzw. Hautfaserdarm zeichnet sich zwar durch eine natürliche Oberfläche und eine angenehme Haptik aus, wird aber nach einem sehr aufwendigen und umweltbelastenden Verfahren aus Rinderhäuten hergestellt. Das Hautgewebe wird mit Säuren (z.B. Milchsäure) bis zu den Fibrillen aufgeschlossen; die hochviskose Masse wird extrudiert und mit gasförmigem Ammoniak oder Ammoniumhydroxid langsam und kompakt ausgefällt und verfestigt. Beim Trocknen erfolgt dann eine Vemetzung (Härtung), um den Produkten eine ausreichende Stabilität zu verleihen, so daß sie den Brühprozeß ohne wesentlichen Festigkeitsverlust überstehen. Naturdärme wie auch Hautfaserdärme werden jedoch aufgrund verschiedener Vorfälle, wie der BSE-Seuche bei Rindern und dem Mißbrauch von Antibiotika, von den Endverbrauchern zunehmend weniger akzeptiert. Es drohen außerdem gesetzliche Beschränkungen. Eine Alternative zu den genannten Därmen ist daher wünschenswert. Cellulosedärme, selbst solche mit Faserverstärkung, können diese Aufgabe nur eingeschränkt übemehmen. Auch das Herstellverfahren ist nicht weniger aufwendig und umweltschädigend als das Kollagenverfahren. Nahrungsmittelhüllen auf Basis synthetischer Polymere können hingegen eine echte Alternative darstellen. Diese sind über ein kombiniertes Extrusions- und Blasformverfahren (gegebenenfalls biaxiale Verstreckung) sehr einfach und hygienisch einwandfrei herstellbar. Allerdings konnten sich reine Kunststoffhüllen aufgrund ihrer unnatürlichen, glatten und glänzenden Oberfläche nicht im Marktbereich für Kollagen- bzw. Naturdarm durchsetzen. Sie können zudem nur wenig Wasser speichern und zeigen nur eine geringe Durchlässigkeit für Wasserdampf und Rauch.

Es sind auch mit Naturstoffen modifizierte Kunststoffhüllen bekannt. So ist in der EP-B 0 711 324 ein verstärktes biologisch abbaubares Polymer beschrieben, das thermoplastische Stärke, ein hydrophobes, biologisch abbaubares Polymer und eine Naturfaser wie Ramie oder Sisal enthält. In der EP-A 0 596 437 wird von Mischungen aus Stärke bzw. thermoplastischer Stärke z.B. mit aliphatischen Polyestern oder Polyvinylalkohol berichtet, die sich durch thermoplastische Extrusion zu wasserbeständigen, biologisch abbaubaren Folien verarbeiten lassen.

In der EP-B 0 539 544 ist eine Polymermischung aus Stärke, einem Weichmacher und einem Polyolefin offenbart. Ein Material aus einem oder mehreren synthetischen Polymeren, z.B. einem Homo- oder Copolymer aus Hydroxycarbonsäuren, Polyurethanen, Polyamiden und Vinylalkohol-Copolymeren und Stärke wird in der WO 92/19680 beschrieben.

Bei den meisten Anwendungen dieser Art steht die biologische Abbaubarkeit im Vordergrund. Natürliches Aussehen und eine angenehme Haptik sind dabei zweitrangig, ebensowenig spielt die hohe Wasserdampfdurchlässigkeit eine Rolle.

Eine rauchdurchlässige Nahrungsmittelhülle ist in der EP-A 920 808 beschrieben. Sie enthält als wesentlichen Bestandteil Cellulose-acetat-propionat, gegebenenfalls im Gemisch mit einem aliphatischen Polyamid oder Copolyamid, wie Polyamid 6, Polyamid 6/66, Polyamid 12 oder Polyamid 6/12. Sie kann darüber hinaus Weichmacher, wie Phthalsäureester, Glykol- oder Glycerin-Derivate, enthalten.

In der EP-A 1 102 814 sind Nahrungsmittelhüllen aus einem thermoplastischen Gemisch mit einer Polysaccharid-Komponente und einem Plastifizierungsmittel offenbart. Sie bestehen aus thermoplastischer Stärke oder thermoplastischen Stärkederivaten und einem thermoplastischem Polyesterurethan (TPU). Nahtlose schlauchförmige Hüllen aus diesem Material haben kleine Sigma-15-Werte von etwa 3 bis 4,5; d.h. sie sind leicht verformbar und zeigen folglich keine ausreichende Kaliberkonstanz. Die Hüllen haben eine milchige, matte Optik. Es fehlt ihnen jedoch die Rauhigkeit und die leicht inhomogene Struktur, die die natürliche Haptik eines Kollagen- oder Naturdarmes ausmachen. Zudem wirkt sich nachteilig aus, daß diese Hüllen eine unerwünscht starke Trübung zeigen, sobald sie mit einerZweitverpackung aus Kunststofffolie umgeben und dadurch hoher Luftfeuchte ausgesetzt sind.

Aus der EP-A 0 935 423 ist eine Wursthülle auf Polyamidbasis bekannt, die Blockcopolymere mit harten aliphatischen Polyamidblöcken und weichen aliphatischen Polyetherblöcken enthält. Die Wasserdampfdurchlässigkeit solcher Hüllen beträgt etwa 75 g/m²d, was für an der Luft reifende Rohwurstsorten, wie Salami, zu wenig ist. Von den Endverbrauchern wird deren sehr glänzende, glatte und künstlich wirkende Oberfläche kritisiert.

Die beiden zuletzt genannten Kunststoffhüllen haben sich als Alternative zu einem traditionellen Kollagen- oder Naturdarm nicht durchsetzen können. Erstere vor allem aufgrund ihrer mangelhaften Kaliberstabilität und ihrer Trübung in Zweitverpackung. Letztere konnte sich im Markt nicht etablieren wegen ihrer glänzenden, unnatürlichen Optik und ihrer geringen Wasserdampfdurchlässigkeit, die für viele Anwendungen im Rohwurstsektor nicht ausreicht. DE-A-4141292 betrifft eine Hölle gemäß Oberbegriff des Anspruches 1.

Es bestand daher die Aufgabe, eine Nahrungsmittelhülle zur Verfügung zu stellen, die eine besonders matte, rauhe und natürliche Oberflächenstruktur zeigt und auch in einer Zweitverpackung nicht trübe wird. Außerdem soll die Wasserdampfdurchlässigkeit (WDD) über einen großen Bereich definiert einstellbar sein (WDD 50 bis etwa 1.100 g/m^{2.}d), so daß das Reifeverhalten und die Durchlässigkeit für Heiß-und Kaltrauch über die Rezeptur steuerbar sind. Die Hülle soll darüber hinaus eine ausreichend hohe Kaliberstabilität aus (σ₁₅ -Wert größer als 8 N/mm²) aufweisen und sich einwandfrei von dem Nahrungsmittel (das ist in der Regel ein Wurstbrät) abschälen lassen.

Es wurde gefunden, das sich die Aufgabe durch Einarbeiten eines anorganischen und/oder organischen Füllstoffs in das thermoplastische Gemisch lösen läßt. Dadurch bekommt die Oberfläche der Hülle eine natürlich aussehende Beschaffenheit und verliert den unerwünschten Glanz. Zudem erhöht der Füllstoff das Wasserspeichervermögen und verbessert die Wasserdampf- und Rauchdurchlässigkeit.

Gegenstand der vorliegenden Erfindung ist demgemäß eine Nahrungsmittelhülle aus einem thermoplastischen Gemisch, das mindestens ein aliphatisches Polyamid und/oder Copolyamid und/oder mindestens ein Glykol- und/oder Polyglykol-Einheiten aufweisendes, aliphatisches und/oder teilaromatisches Copolyamid umfaßt und dadurch gekennzeichnet ist, daß das Gemisch mindestens einen anorganischen und/oder organischen Füllstoff umfaßt, wobei die Hülle eine maximale Rauhtiefe Rₘₐₓ, bestimmt gemäß DIN 4768, von 7 bis 60 µm und eine Wasserdampfdurchlässigkeit, bestimmt gemäß DIN 53122, von mindestens 50 g/m^{2.}d aufweist.

Bevorzugt weist die Hülle eine Wasserdampfdurchlässigkeit von 100 bis 1.100 g/m². d auf. Sie eignet sich damit speziell für Rohwurst, wie luftgetrocknete Salami.

Folgende Polymere bzw. Polymergemische kommen für das thermoplastische Gemisch in Betracht:
(1) ein aliphatisches Polyamid und/oder Copolyamid [abgekürzt: (Co-)Polyamid]
(2) ein Glykol- und/oder Polyglykol-Einheiten aufweisendes aliphatisches und/oder teilaromatisches Copolyamid [abgekürzt: Polyether-block-amid]
(3) ein Blend aus (1) und (2).

Bevorzugte (Co-)Polyamide dieser Art sind Polyamid-6 oder PA-6 (Poly(ε-caprolactam) = Homopolymer aus ε-Caprolactam bzw. 6-Amino-hexansäure), PA-66 (Polyhexamethylenadipamid = Copolyamid aus Hexamethylendiamin und Adipinsäure), PA-6/66 (Copolyamid aus ε-Caprolactam, Hexamethylendiamin und Adipinsäure), PA-6/10 (Polyhexamethylensebacinamid = Copolyamid aus Hexamethylendiamin und Sebacinsäure) PA-6/12 (Polyhexamethylendodecanamid = Copolyamid aus ε-Caprolactam und ω-Aminolaurinsäurelactam) oder PA-12 (Poly(ε-laurinlactam) = Homopolymer aus Laurinlactam). Das (Co-)Polyamid bewirkt vor allem eine höhere Steifigkeit der Folie.

Das Polyether-block-amid ist vorzugsweise ein Blockcopolymer. Die Polyglykol-Blöcke weisen dabei in der Regel 5 bis 20 Glykol-Einheiten, bevorzugt etwa 7 bis 15, besonders bevorzugt etwa 10 Glykol-Einheiten auf. Unter der Bezeichnung Glykol sollen dabei mindestens zweiwertige, aliphatische oder cycloaliphatische Alkohole mit 2 bis 15 Kohlenstoffatomen verstanden werden. Die endständigen Hydroxygruppen der Polyglykol-Blöcke können dabei durch Aminogruppen ersetzt sein. Solche Blockcopolymere sind beispielsweise unter der Bezeichnung ®Jeffamine erhältlich.

Der polyglykolische Anteil des aliphatischen oder teilaromatischen Copolyamids kann auch Estersegmente aufweisen. Diese bestehen aus Einheiten von mindestens einem bifunktionellen, aliphatischen Alkohol, bevorzugt Ethylenglykol oder 1,2-Propylenglykol (= Propan-1,2-diol), und Einheiten von mindestens einer zweiwertigen aliphatischen, cycloaliphatischen oder aromatischen Dicarbonsäure, bevorzugt Adipinsäure, Sebacinsäure oder Isophthalsäure.

Das glykol- oder polyglykolmodifizierte Copolyamid umfaßt demgemäß in einer bevorzugten Ausführungsform
a) mindestens einen Amidanteil mit Einheiten
   a1) aus mindestens bifunktionellen aliphatischen und/oder cycloaliphatischen Aminen (speziell Hexamethylendiamin oder Isophorondiamin) und aus mindestens bifunktionellen aliphatischen und/oder cycloaliphatischen und/oder aromatischen Carbonsäuren (speziell Adipinsäure, Sebacinsäure, Cyclohexandicarbonsäure, Isophthalsäure oder Trimellitsäure), oder
   a2) aus aliphatischen Aminocarbonsäuren, insbesondere ω-Aminocarbonsäuren, oder deren Lactamen (speziell ε-Caprolactam oder ω-Laurinlactam) oder
   a3) Mischungen von a1) und a2) und
b) mindestens einen Glykol- oder Polyglykolanteil mit Einheiten
   b1) aus einem mindestens bifunktionellen, aliphatischen und/oder cycloaliphatischen Alkohol mit 2 bis 15 Kohlenstoffatomen, insbesondere 2 bis 6 Kohlenstoffatomen (speziell Ethylenglykol, Propan-1,2-diol, Propan-1,3-diol, Butan-1,4-diol oder Trimethylolpropan) oder
   b2) aus mindestens einem Oligo- oder Polyglykol aus einem der in b1) genannten Alkohole (speziell Diethylenglykol, Triethylenglykol, Polyethylenglykol oder Poly(1,2-propylenglykol)) oder
   b3) aus mindestens einem aliphatischen Oligo- oder Polyglykol der in b2) genannten Art, deren endständige Hydroxyruppen durch Aminogruppen ersetzt sind (® Jeffamine) oder
   b4) aus einer Mischung von b1), b2) und/oder b3) oder
   b5) aus einem esterhaltigen polyglykolischen Anteil, gebildet aus mindestens bifunktionellen, aliphatischen Alkoholen (speziell Ethylenglykol oder 1,2-Propylenglykol) und mindestens zweiwertigen aliphatischen, cycloaliphatischen und/oder aromatischen Dicarbonsäuren (speziell Adipinsäure, Sebacinsäure oder Isophthalsäure) oder
   b6) aus einer Mischung von b1), b2) und/oder b5).

Vorzugsweise enthält das modifizierte Polyamid neben den genannten Bestandteilen keine weiteren.

Schließlich können in dem thermoplastischen Gemisch sowohl (Co-)Polyamid als auch Polyether-block-amid enthalten sein. Der Anteil an (Co-)Polyamid beträgt 10 bis 99 Gew.-%, bevorzugt 15 bis 90 Gew.-%, und der Anteil an Polyether-block-amid 1 bis 90 Gew.-%, bevorzugt 10 bis 85 Gew.-%, jeweils bezogen auf das Gesamtgewicht der genannten Polymere im thermoplastischen Gemisch.

Bezogen auf das Gesamtgewicht des thermoplastischen Gemisches ist (Co-)Polyamid, Polyether-block-amid oder eine Mischung von beiden in einem Anteil von 50 bis 99 Gew.-%, bevorzugt 60 bis 98 Gew.-%, enthalten.

Das thermoplastische Gemisch enthält erfindungsgemäß mindestens noch einen Füllstoff, der organischen bzw. anorganischen Ursprungs sein kann.

Als organischer Füllstoff kommen insbesondere Kohlenhydrate in Frage; diese können aus einem natürlichen Polysaccharid und/oder einem Derivat davon bestehen. Verzweigte und vemetzte Polysaccharide und deren Derivate sind ebenfalls geeignet. Proteine sind bedingt einsetzbar, da sie bei den hohen Verarbeitungstemperaturen zu einem großen Anteil zersetzt werden.

Besonders geeignete Polysaccharide sind z.B. pflanzliche Pulver, Fasern, Fibride oder Pulpe aus Cellulose. Sie sollten Komgrößen bzw. Faserlängen von 5 bis 3000 µm, bevorzugt 10 bis 1000 µm, besonders bevorzugt 15 bis 500 µm besitzen. Darunter fallen Pflanzenhaare bzw. Samenfasem wie Baumwolle, Kapok oder Akon, Bastfasem wie Flachs bzw. Leinen, Hanf, Jute, Sunn, Kenaf, Urena, Rosella oder Ramie, Hartfasem (Sisal, Henequen, Manila, Fique, Phormium, Alfagras, Torf, Stroh, Jucca), Fruchtfasem (Kokos, Ananas, Apfel, Orange), Weich- und Hartholzfasern (Fichte, Kiefer, Korkmehl), andere Pflanzenfasern, wie Tillandsia, sowie Fasern aus Weizen, Kartoffeln, Tomaten oder Karotten.

Einsetzbar ist auch die native Stärke, beispielsweise aus Kartoffeln, Maniok, Maranta (= Arrowroot), Batate, Weizen, Mais, Roggen, Reis, Gerste, Hirse, Hafer, Sorghum, Kastanien, Eicheln, Bohnen, Erbsen, Bananen, Palmmark (Sago). Maisstärke ist besonders bevorzugt. Das Verhältnis von Amylose zu Amylopektin in den verschiedenen Stärken kann dabei variieren. Das Molekulargewicht M_{w} beträgt zweckmäßig etwa 50.000 bis 10.000.000.

Stärkederivate sind beispielsweise gepfropfte native Stärken. Pfropfungsmittel sind insbesondere Maleinsäureanhydrid, Bemsteinsäureanhydrid oder ε-Caprolacton. Geeignet sind daneben Stärkeester, insbesondere Stärkexanthogenate, -acetate, -phosphate, -sulfate, -nitrate, -maleate, -propionate, -butyrate, -lauroate und -oleate. Ferner Stärkeether, wie Stärkemethylether, -ethylether, -propylether, -butylether, -alkenylether, -hydroxyethylether, -hydroxypropylether. Oxidierte Stärken wie Dialdehydstärke, Carboxystärke oder mit Persulfat abgebaute Stärke sind ebenfalls geeignet.

Daneben sind auch vernetzte Kohlenhydrate verwendbar. Diese sind beispielsweise vemetzt mit Harnstoffderivaten, Urotropin, Trioxan, Di- oder Polyepoxiden, Di- oder Polychlorhydrinen, Di- oder Polyisocyanaten, Kohlensäurederivaten, Diestern oder anorganischen Polysäuren, wie Phosphorsäure oder Borsäure.

Weiterhin eignen sich als Naturstoffkomponente: Olivenkernmehl, Xanthan, Gummi arabicum, Gummi Gellan, Gummi Ghatti, Gummi Kraya, Traganthgummi, Emulsan, Rhamsan, Wellan, Schizophyllan, Polygalactorunate, Laminarin, Amylose, Amylopektin sowie Pektine. Einsetzbar sind auch Alginsäure, Alginate, Carrageenan, Furcellaran, Guargummi, Agar agar, Tamarindengummi, Araliagummi, Arabinogalactan, Pullulan, Johannesbrotgummi, Chitosan, Dextrine, 1,4-α-D-Polyglucan. Das Molekulargewicht M_{W} der genannten Kohlenhydrate liegt allgemein bei 500 bis 100.000.

Verwendbar sind auch synthetische, hochtemperaturstabile Fasern oder Pulver auf Basis von Fluorpolymeren, Polysulfonen, Polyethersulfonen, Polyetherketonen, Polyphenylensulfiden, Polyaramiden, Polyimiden, aromatischen Polyestern, Polychinoxalinen, Polychinolinen, Polybenzimidazolen, flüssigkristallinen Polymeren und Leiterpolymeren. Deren Faserlänge bzw. Komgröße beträgt allgemein 5 bis 3.000 µm, bevorzugt 10 bis 1.000 µm, besonders bevorzugt 15 bis 500 µm.

Ebenso eignen sich anorganische Füllstoffe bzw. Verstärkungsmaterialien wie Glasfasern, Glasfilamente, Glasstapelfasem, Mikroglaskugeln, Mineralwollfasern, Kohlenstofffasem, Zeolithe, Quarz, Aluminiumsilikathohlkugeln, Siliciumdioxid, Bariumsulfat, Calciumsulfat und -carbonat, Aluminiumhydroxid, Magnesiumcarbonat, Titandioxid, Talk, Ton, Glimmer.

Der Füllstoff bzw. die Faser verleiht der Hülle ein seidenmattes, pergamentartiges, naturdarmähnliches Aussehen. Die Oberfläche erhält eine leichte Rauhigkeit, die über die Art des Füllstoffes eingestellt werden kann. Über den Füllstoffanteil kann zudem die Ringelfähigkeit der Hülle eingestellt werden. Ferner wirkt der Füllstoff als Verstärkungsmittel, wodurch die Kaliberstabilität des gefüllten Materials gegenüber dem ungefüllten deutlich erhöht ist. Schließlich bewirken Füllstoffe - insbesondere organische - erhöhte Gas- und Wasserdampfdurchlässigkeit, die sich ebenfalls durch Art und Anteil einstellen lassen.

Eine Besonderheit der Kollagenhüllen ist ihr gutes Wasserspeichervermögen, das wesentlich zu dem guten Reifeverhalten bei Rohwurstsorten beiträgt. Dieser Effekt kann bei der erfindungsgemäßen Hülle durch Füllstoffe nachgeahmt werden, die hoch quellfähig sind bzw. wie Superabsorber wirken. Dies wirkt sich positiv auf das Reifeverhalten von Rohwurst aus, es begünstigt auch das Schimmelwachstum bei schimmelgereifter Rohwurst. Geeignet sind insbesondere sulfat-, carboxylat- oder phosphatgruppenhaltige Substanzen bzw. solche mit quartemären Ammoniumgruppen. Ebenso sind hoch quellfähige neutrale Substanzen geeignet. Die Materialien können vemetzt, unvemetzt, verzweigt oder linear vorliegen. In Frage kommen z.B. natürliche, organische Verdickungsmittel wie Agar-Agar, Alginate, Pektine, Carrageenane, Traganth, Gummi arabicum, Guarkernmehl, Johannisbrotkemmehl und Gelatine, daneben auch abgewandelte organische Naturstoffe wie (Natrium)-Carboxymethylcellulose, Natriumcarboxymethyl-ethyl-cellulose, Methyl-hydroxyethyl-cellulose, Methyl-hydroxypropyl-cellulose, Hydroxyethylcellulose und Carboxymethylstärke. Einsetzbar sind femer anorganische Verdickungsmittel (z.B. Kieselsäure oder Polykieselsäure), Tonmineralien, wie Montmorillonite oder Zeolithe. Als vollsynthetische Verdickungsmittel einsetzbar sind Vinylpolymere, Polycarbonsäuren, Polyether, Polyimine und Polyamide. Ferner Superabsorberauf Polyacrylat- bzw. Polymethacrylatbasis.

Die Rauchdurchlässigkeit läßt sich ebenfalls durch Art und Anteil an Füllstoff(en) einstellen. Die Hülle istfür Kalträucherung (bis 25 °C), Warmräucherung (25-50°C) und Heißräucherung (>50 °C) geeignet. Die Intensität des auf die Wurst übertragenen Raucharomas und der Rauchfarbe steigt mit zunehmender Temperatur des Rauchgases. Darüber hinaus besitzt der Rauch aufgrund seiner aldehydischen, phenolischen und säurehaltigen Bestandteile eine konservierende, antioxidative und verfestigende Wirkung.

Der Gesamtanteil an Füllstoff beträgt allgemein 1 bis 50 Gew.%, bevorzugt 1 bis 35 Gew.-%, besonders bevorzugt 2 bis 30 Gew.-%, jeweils bezogen auf das Gesamtgewicht des thermoplastischen Gemisches. Bei einem hohen Füllstoffanteil läßt sich die Hülle papierartig reißen und kann vom Wurstbrät abgeringelt werden.

Die erfindungsgemäße Nahrungsmittelhülle weist bevorzugt eine maximale Rauhtiefe Rₘₐₓ (bestimmt gemäß DIN 4768; E 1989) von 10 bis 50 µm, besonders bevorzugt von 14 bis 48 µm, einen Mittenrauhwert Ra (bestimmt gemäß DIN 4762; E 1989) von 0,8 bis 10 µm, bevorzugt von 1,2 bis 7 µm, besonders bevorzugt von 1,5 bis 6,5 µm, und eine gemittelte Rauhtiefe Rz (bestimmt gemäß DIN 4768; E 1989) von 4 bis 45 µm, bevorzugt von 7 bis 35 µm, besonders bevorzugt von 8 bis 32 µm, auf. Die Rauhigkeit läßt sich über den Anteil und die Komgröße der Füllstoffe einstellen.

DerZusatz eines Weichmachers bzw. eines Plastfizierungsmittels ist zu empfehlen. Die Verarbeitung auf den Folienblasanlagen wird dadurch vereinfacht, da das Material weniger spröde ist. Außerdem wird durch den besseren Aufschluß der Füllstoffkomponente eine homogenere Folienstruktur erhalten, was für bestimmte Anwendungen erwünscht ist.

Bevorzugte Plastifizierungsmittel sind Dimethylsulfoxid (DMSO), Butan-1,3-diol, Glycerin, Wasser, Ethylenglykol, Butylenglykol, Diglycerid, Diglykolether, Formamid, N-Methylformamid, N,N-Dimethylformamid (DMF), N,N-Dimethylhamstoff, N,N-Dimethylacetamid, N-Methylacetamid, Polyalkylenoxid, Glycerinmono-, -di- oder -triacetat, Sorbit, Erythrit, Mannit, Gluconsäure, Galacturonsäure, Glucarsäure, Glucuronsäure, Polyhydroxycarbonsäuren, Glucose, Fructose, Saccharose, Zitronensäure oder Zitronensäurederivate oder Polyvinylalkohol. Art und Anteil an Plastifizierungsmittel(n) richten sich nach den jeweils ausgewählten Füllstoffen und lassen sich durch einfache Vorversuche optimieren.

Der Anteil an Weichmacher bzw. Plastifizierungsmittel beträgt bis zu 30 Gew.-%, bevorzugt bis zu 20 Gew.-%, besonders bevorzugt 2 bis 20 Gew.-%, jeweils bezogen auf das Gesamtgewicht des thermoplastischen Gemisches.

Falls gewünscht, kann die erfindungsgemäße Hülle durch Farbstoffe und/oder Pigmente eingefärbtwerden. Beim Verstrecken können sich um die Pigmentpartikel herum Hohlräume (Vakuolen) bilden. Durch die Vakuolen wird die Wasserdampf- bzw. Gasdurchlässigkeit der Folie noch zusätzlich erhöht. Die Farbstoffe oder Pigmente werden zweckmäßig dem thermoplastischen Gemisch vor der Extrusion zugegeben. Außerdem können bei Bedarf Additive zugesetzt werden, die die Bräthaftung beeinflussen. Grundsätzlich geeignet sind stickstoffhaltige und carboxylgruppenhaltige Verbindungen. Eine bessere Bräthaftung, die insbesondere bei Rohwurst verlangt wird, kann auch durch physikalische Verfahren wie Koronabehandlung erzielt werden.

Die erfindungsgemäße Hülle läßt sich hygienisch einwandfrei in gleichbleibender Qualität herstellen. Das Herstellverfahren ist wesentlich einfacher als der Kollagenprozeß. Schließlich ist die Hülle nach den bekannten Verfahren (Drucken, Kranzen, Raffen) konfektionierbar.

Hergestellt wird die erfindungsgemäße Nahrungsmittelhülle allgemein durch ein Schlauchblasverfahren oder durch biaxiales Streckorientieren. Bei dem Schlauchblasverfahren wird der extrudierte Schlauch durch Aufblasen in Umfangsrichtung (Querrichtung) und durch Abzugswalzen in Längsrichtung gereckt. Da die Verformung unmittelbar aus der Schmelze erfolgt, ist der Orientierungsgrad der Polymerketten gering. Beim biaxialen Streckorientieren wird zunächst durch Extrudieren ein Schlauch mit relativ hoher Wandstärke hergestellt. Dieser wird nur wenig oder gar nicht aufgeblasen. Anschließend wird der sogenannte Primärschlauch abgekühlt. Erst in einem weiteren Schritt wird der Primärschlauch auf die zur biaxialen Streckorientierung notwendige Temperatur aufgeheizt und dann durch einen von innen wirkenden Gasdruck und durch Abzugsrollen biaxial streckorientiert. Dadurch wird ein hoher Orientierungsgrad der Polymerketten erreicht, viel höher als bei einer Blasfolie.

Die nahtlose schlauchförmige Hülle weist vorzugsweise eine Dicke von 40 bis 200 µm auf, wenn sie nach einem Schlauchblasverfahren hergestellt ist, und eine Dicke von 25 bis 75 µm, wenn sie durch biaxiale Streckorientierung (Double-bubble Verfahren) erhalten wurde. Nahtlose schlauchförmige Hüllen, die als künstliche Wursthüllen verwendet werden sollen, werden bevorzugt durch biaxiale Streckorientierung hergestellt. Nach derbiaxialen Streckorientierung folgtzweckmäßiger weise noch eine teilweise oder vollständige Thermofixierung. Durch die Thermofixierung kann der Schrumpf der Hülle auf den gewünschten Wert eingestellt werden. Künstliche Wursthüllen haben allgemein einen Schrumpf von weniger als 20 % in Längs- und Querrichtung, wenn sie 1 min lang in Wasser von 90 °C gelegt wurden.

Die erfindungsgemäße Nahrungsmittelhülle eignet sich aufgrund ihrer Wasserdampfdurchlässigkeit besonders als künstliche Wursthülle für Rohwurst, wie Salami.

Die nachfolgenden Beispiele illustrieren die Erfindung. Prozente sind darin Gewichtsprozente, soweit nicht anders angegeben oder aus dem Zusammenhang ersichtlich. Die in den Beispielen genannten Komponenten wurden jeweils in einem Zweischneckenextruder vermischt und thermoplastifiziert.

### Verfahren 1:

Zunächst wurde der organische Füllstoff in den Extruder eingefüllt und mit einem Plastifizierungsmittel versetzt. Dabei wurde die Temperatur im Extruder über mehrere Zonen von etwa 90 bis etwa 180 °C erhöht. Anschließend wurde das (Co-)Polyamid oder das Polyether-block-amid oder das Gemisch aus beiden und nach Bedarf Additive zur Verbesserung der Bräthaftung in den Extruder eingespeist, mit den übrigen Bestandteilen bei Temperaturen zwischen 200 und 230 °C vermischt und die daraus gebildete thermoplastische Schmelze extrudiert. Das Extrudat wurde schließlich zu einem Granulat zerkleinert.

### Verfahren 2:

Hierbei wurde zuerst das (Co-)Polyamid oder das Polyether-block-amid oder das Gemisch aus beiden und nach Bedarf Additive zur Verbesserung der Bräthaftung in den Extruder eingespeist und bei Temperaturen zwischen 200 und 230°C vermischt. Danach wurde der organische bzw. anorganische Füllstoff hinzugegeben. Ein Plastifizierungsmittel ist hierbei nicht zwingend erforderlich. Das thermoplastische Gemisch wurde schließlich zu einem Granulat zerkleinert.
Das Granulat wurde dann auf einer Blasfolienanlage bei etwa 190 bis 230 °C zu einer Schlauchfolie verarbeitet.

In den Beispielen wurden verwendet:
- Polyamid 6/66-Polyethylenglykol-Blockcopolymer mit Ester-Zwischengruppen (®Grilon FE 7012 der Ems Chemie AG)
- Polyamid 6-Polyethylenglykol-Blockcopolymer (®Pebax MH 1657 SA der Elf Atochem S.A.)
- Polyamid 12-Polyethylenglykol-Blockcopolymer (®Pebax MV 1074 SA der Elf Atochem S.A.)
- Polyamid 6/66 (®Ultramid C4 der BASF Aktiengesellschaft)
- Polyamid 6 (®Grilon F40 der Ems Chemie AG)

Zusammensetzung und Eigenschaften der schlauchförmigen Hüllen gemäß den Beispielen 1 bis 14 sind in den Tabellen 2 und 3 zusammengestellt.

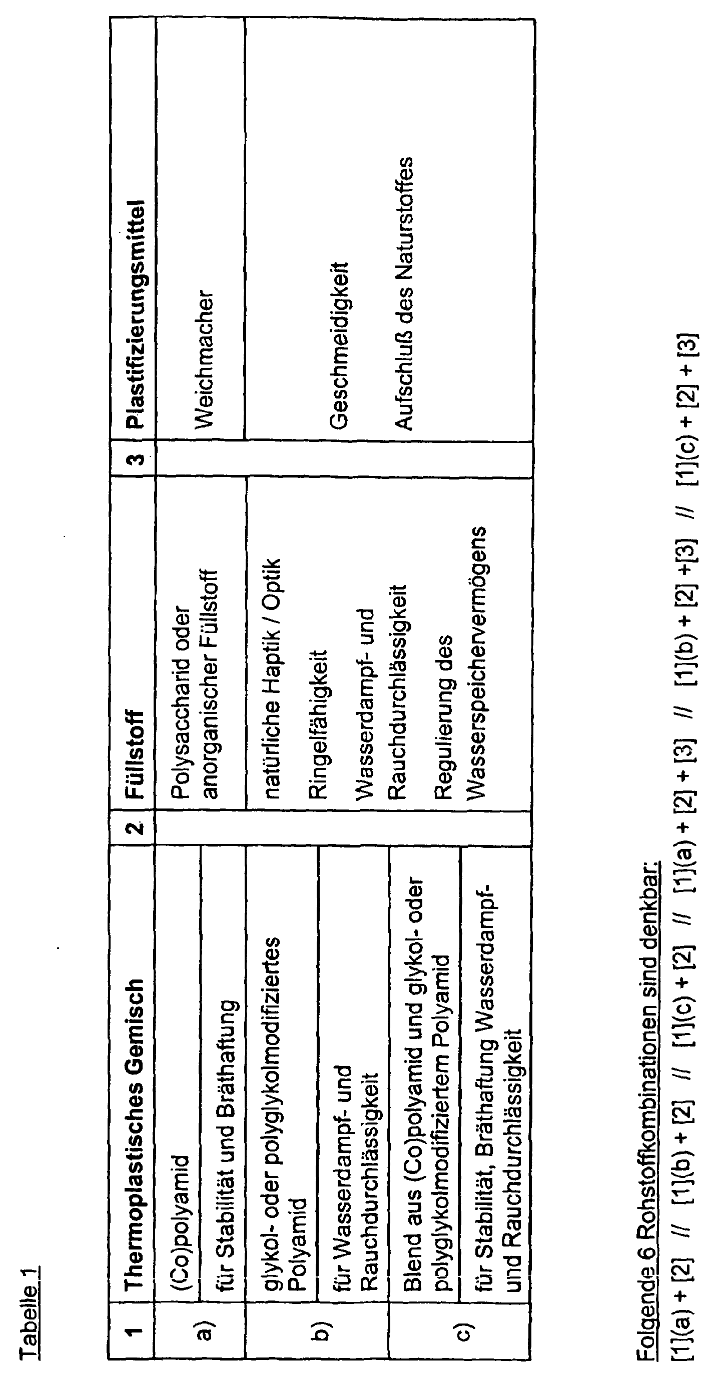

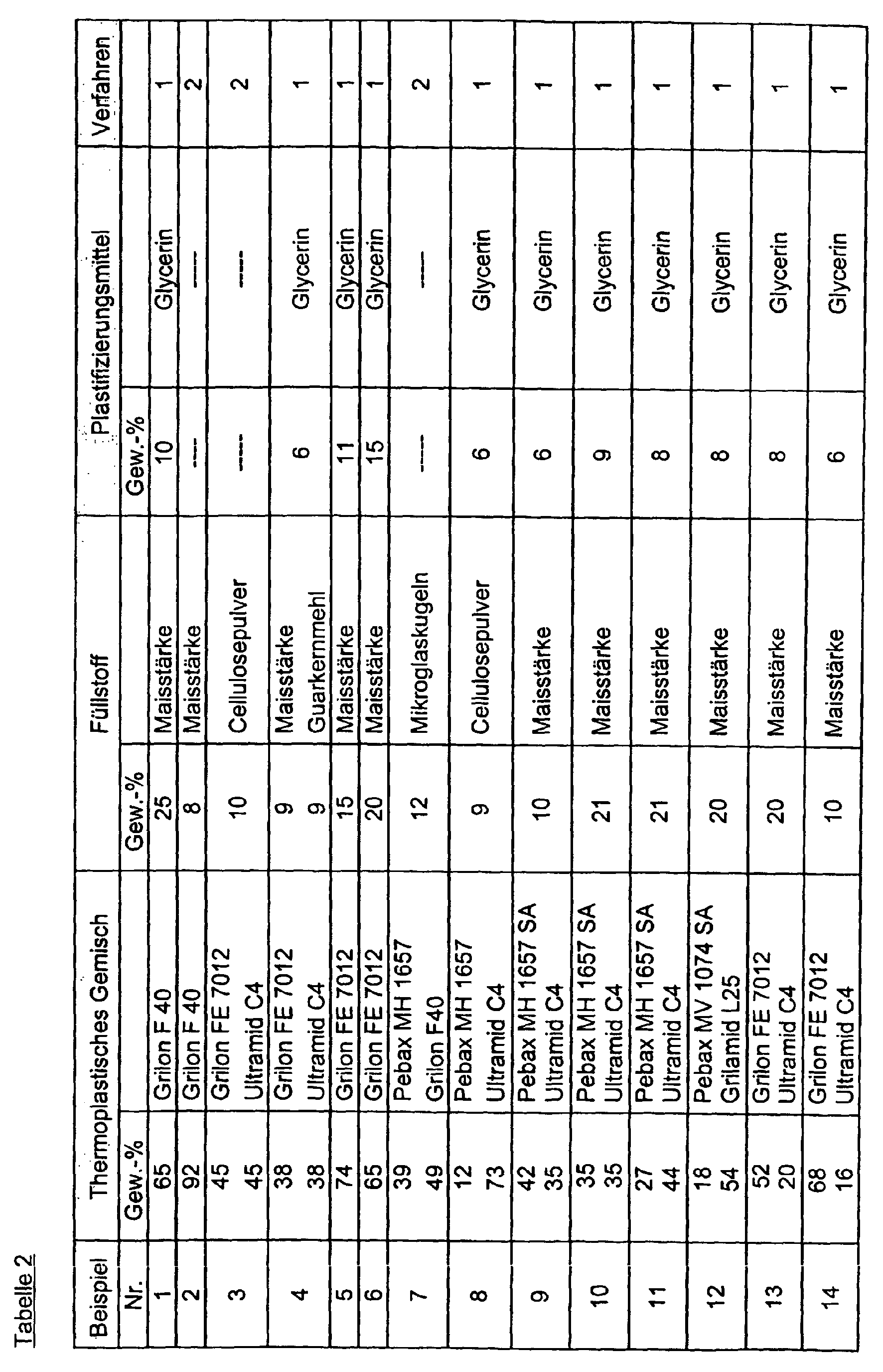

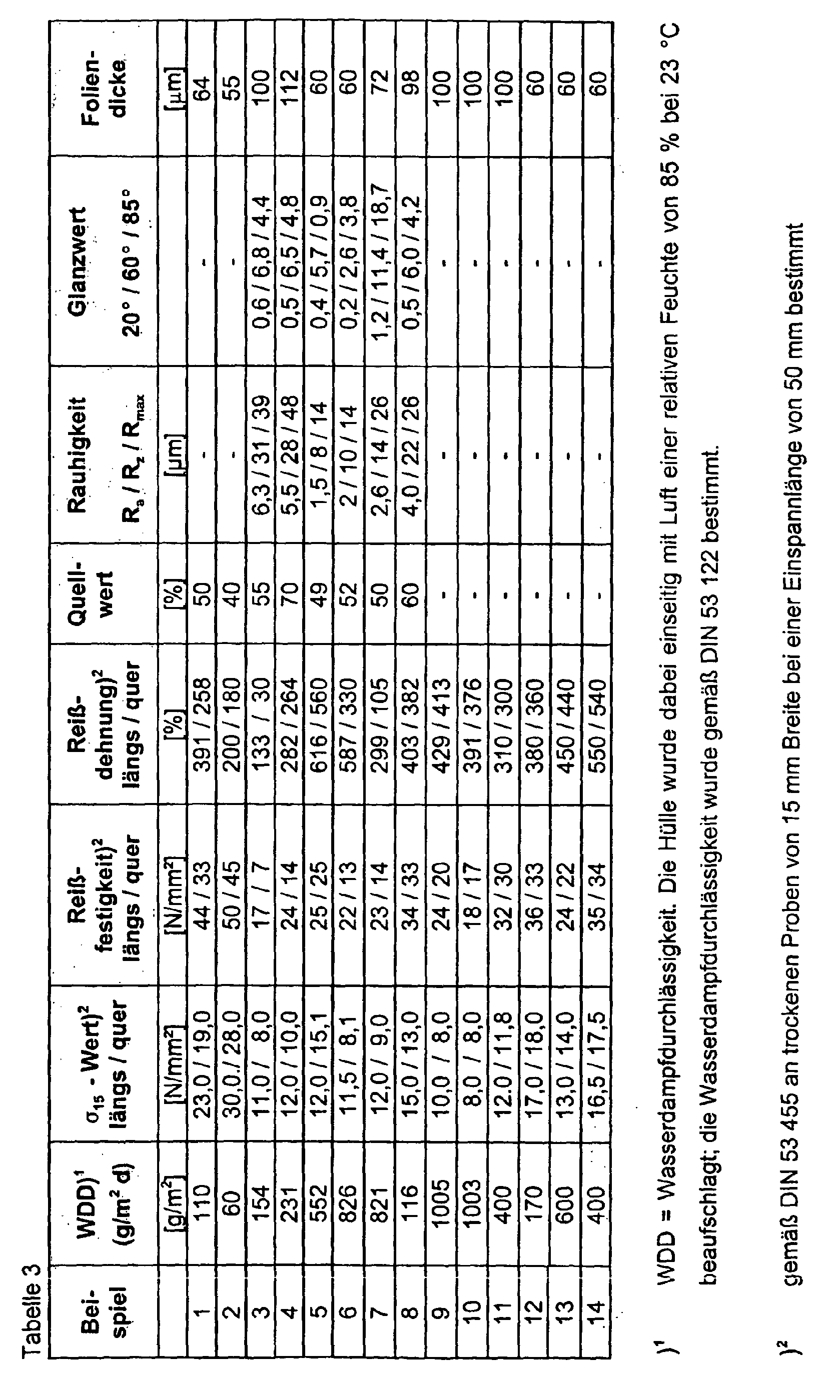

### Vergleichsbeispiel 1 (EP-A 1 102 814)

Wie in den vorangegangenen Beispielen beschrieben, wurde eine Schlauchfolie hergestellt aus einem thermoplastischen Gemisch der in der EP-A 1 102 814 genannten Art. Konkret enthielt das Gemisch.

| | |
|---|---|
| 42 Gew.-% | thermoplastisches Polyesterurethan (wie in der EP-A 1 102 814 beschrieben) |
| 35 Gew.-% | Maisstärke |
| 23 Gew.-% | Glycerin |

Die fertige Folie hatte eine Dicke von 120 µm. Ihr σ₁₅-Wert betrug 4,2 N/mm² und ihre Wasserdampfdurchlässigkeit 200 g/m^{2.}d. Die Rauhigkeiten Ra / Rz / Rₘₐₓ betrugen 0,3 / 1,8 / 2,4 µm.

Diese Folie wies trotz höherer Dicke eine geringere mechanische Stabilität (erkennbar am sigma-15-Wert) auf als die erfindungsgemäße. Zudem war die Rauhigkeit der Hülle deutlich geringer.

### Vergleichsbeispiel 2 (EP-A 935 423)

Wie in den vorstehend beschrieben wurde eine Schlauchfolie aus einem thermoplastischen Gemisch der folgenden Zusammensetzung hergestellt:

| | |
|---|---|
| 38 Gew.-% | Grilon F40 |
| 27 Gew.-% | Ultramid C4 |
| 35 Gew.-% | Grilon FE 7012 |

Die fertige Folie hatte eine Dicke von 25 µm und eine Wasserdampfdurchlässigkeit von 75 g / m² . d. Die Rauhigkeiten Ra / Rz / Rmax betrugen 0,5 / 3,0 3,7 und der Glanzwert lag bei 20° / 60° / 85° lautete 13,5/ 82,1 / 87,6. Die erfindungsgemäße Folie besaß dagegen eine deutlich höhere Wasserdampfdurchlässigkeit, einen um einige Größenordnungen geringeren Glanz und eine natürlichere Rauhigkeit.

## Patentansprüche

1. Nahrungsmittelhülle aus einem thermoplastischen Gemisch, das mindestens ein aliphatisches Polyamid und/oder Copolyamid und/oder mindestens ein Glykol- und/oder Polyglykol-Einheiten aufweisendes aliphatisches und/oder teilaromatisches Copolyamid umfaßt, **dadurch gekennzeichnet, daß** das Gemisch mindestens einen anorganischen und/oder organischen Füllstoff umfaßt und die Hülle eine maximale Rauhtiefe Rmax, bestimmt gemäß DIN 4768, von 7 bis 60 µm und eine Wasserdampfdurchlässigkeit, bestimmt gemäß DIN 53122, von mindestens 50 g/m²·d aufweist.

2. Nahrungsmittelhülle gemäß Anspruch 1, **dadurch gekennzeichnet, daß** sie eine Wasserdampfdurchlässigkeit, bestimmt gemäß DIN 53122, von 100 bis 1.100 g/m^{2.}d aufweist.

3. Nahrungsmittelhülle gemäß Anspruch 1 oder 2, **dadurch gekennzeichnet, daß** das (Co)polyamid PA-6, PA-66, PA-6/66, PA-6/10, PA-6/12 oder PA-12 ist.

4. Nahrungsmittelhülle gemäß Anspruch 1, **dadurch gekennzeichnet, daß** das Glykol- und/oder Polyglykol-Einheiten aufweisende aliphatische und/oder teilaromatische Copolyamid
a) mindestens einen Amidanteil mit Einheiten
a1) aus mindestens bifunktionellen aliphatischen und/oder cycloaliphatischen Aminen und aus mindestens bifunktionellen aliphatischen und/oder cycloaliphatischen und/oder aromatischen Carbonsäuren, oder
a2) aus aliphatischen Aminocarbonsäuren oder deren Lactamen oder
a3) Mischungen von a1) und a2) und
b) mindestens einen Glykol- oder Polyglykolanteil mit Einheiten
b1) aus einem mindestens bifunktionellen, aliphatischen und/oder cycloaliphatischen Alkohol mit 2 bis 15 Kohlenstoffatomen, insbesondere 2 bis 6 Kohlenstoffatomen oder
b2) aus mindestens einem Oligo- oder Polyglykol aus einem der in b1) genannten Alkohole oder
b3) aus mindestens einem aliphatischen Oligo-oder Polyglykol der in b2) genannten Art, deren endständige Hydroxyruppen durch Aminogruppen ersetzt sind oder
b4) aus einer Mischung von b1), b2) und/oder b3) oder
b5) aus einem esterhaltigen polyglykolischen Anteil, gebildet aus mindestens bifunktionellen, aliphatischen Alkoholen und mindestens zweiwertigen aliphatischen, cycloaliphatischen und/oder aromatischen Dicarbonsäuren oder
b6) aus einer Mischung von b1), b2) und/oder b5)
aufweist.

5. Nahrungsmittelhülle gemäß Anspruch 1, **dadurch gekennzeichnet, daß** das thermoplastische Gemisch eine Mischung aus (Co-)Polyamid und Polyether-block-amid enthält, wobei der Anteil an (Co-)Polyamid 10 bis 99 Gew.-%, bevorzugt 15 bis 90 Gew.-%, und der Anteil an Polyether-block-amid 1 bis 90 Gew.-%, bevorzugt 10 bis 85 Gew.-%, jeweils bezogen auf das Gesamtgewicht der genannten Polymere im thermoplastischen Gemisches, beträgt.

6. Nahrungsmittelhülle gemäß einem oder mehreren der Ansprüche 1 bis 5, **dadurch gekennzeichnet, daß** der Anteil des (Co-)Polyamids, des Polyether block-amids oder der Mischung von beiden im allgemeinen 50 bis 99 Gew.-%, bevorzugt 60 bis 98 Gew.-%, jeweils bezogen auf das Gesamtgewicht des thermoplastischen Gemisches, beträgt.

7. Nahrungsmittelhülle gemäß einem oder mehreren der Ansprüche 1 bis 6, **dadurch gekennzeichnet, daß** der organische Füllstoff ein Kohlenhydrat, bevorzugt ein natürliches Polysaccharid und/oder ein Derivat davon, ein verzweigtes oder vemetztes Polysaccharide und/oder ein Derivat davon ist.

8. Nahrungsmittelhülle gemäß einem oder mehreren der Ansprüche 1 bis 7, **dadurch gekennzeichnet, daß** der anorganische Füllstoff aus Glasfasern, Glasfilamenten, Glasstapelfasem, Mikroglaskugeln, Mineralwollfasem, Kohlenstofffasem, Zeolithen, Quarz, Aluminiumsilikathohlkugeln, Siliciumdioxid, Bariumsulfat, Calciumsulfat, Calciumcarbonat, Aluminiumhydroxid, Magnesiumcarbonat, Titandioxid, Talk, Ton und/oder Glimmer besteht.

9. Nahrungsmittelhülle gemäß einem oder mehreren der Ansprüche 1 bis 8, **dadurch gekennzeichnet, daß** der Füllstoff hoch quellfähig ist, bevorzugt eine sulfat-, carboxylat- oder phosphatgruppenhaltige Substanz oder eine Substanz enthaltend quartemären Ammoniumsalze oder ein organisches Verdickungsmittel, ein abgewandelter organischer Naturstoff, ein anorganisches Verdickungsmittel, ein vollsynthetisches Verdickungsmittel oder ein Superabsorber auf Polyacrylat- oder Polymethacrylatbasis ist.

10. Nahrungsmittelhülle gemäß einem oder mehreren der Ansprüche 1 bis 9, **dadurch gekennzeichnet, daß** der Anteil des Füllstoffs 1 bis 50 Gew.-%, bevorzugt 1 bis 35 Gew.-%, besonders bevorzugt 2 bis 30 Gew.-%, jeweils bezogen auf das Gesamtgewicht des thermoplastischen Gemisches, beträgt.

11. Nahrungsmittelhülle gemäß einem oder mehreren der Ansprüche 1 bis 10, **dadurch gekennzeichnet, daß** ihre Oberfläche eine maximale Rauhtiefe Rₘₐₓ (bestimmt gemäß DIN 4768) von 10 bis 50 µm, bevorzugt von 14 bis 48 µm, einen Mittenrauhwert Ra (bestimmt gemäß DIN 4762) von 0,8 bis 10 µm, bevorzugt von 1,2 bis 7 µm, besonders bevorzugt von 1,5 bis 6,5 µm, und eine gemittelte Rauhtiefe Rz (bestimmt gemäß DIN 4768) von 4 bis 45 µm, bevorzugt von 7 bis 35 µm, besonders bevorzugt von 8 bis 32 µm, aufweist.

12. Nahrungsmittelhülle gemäß einem oder mehreren der Ansprüche 1 bis 11, **dadurch gekennzeichnet, daß** sie zusätzlich ein Plastifizierungsmittel, bevorzugt Dimethylsulfoxid, Butan-1,3-diol, Glycerin, Wasser, Ethylenglykol, Butylenglykol, Diglycerid, Diglykolether, Formamid, N-Methyl-formamid, N,N-Dimethylformamid, N,N-Dimethylharnstoff, N,N-Dimethylacetamid, N-Methylacetamid, Polyatkylenoxid, Glycerinmono-, di-oder-triacetat, Sorbit, Erythrit, Mannit, Gluconsäure, Galacturonsäure, Glucarsäure, Glucuronsäure, Polyhydroxycarbonsäuren, Glucose, Fructose, Saccharose, Zitronensäure, Zitronensäurederivate oder Polyvinylalkohol, enthält.

13. Nahrungsmittelhülle gemäß Anspruch 12, **dadurch gekennzeichnet daß** der Anteil an Plastifizierungsmittel bis zu 30 Gew.-%, bevorzugt bis zu 20 Gew.-%, besonders bevorzugt 2 bis 20 Gew.-%, jeweils bezogen auf das Gesamtgewicht des thermoplastischen Gemisches, beträgt.

14. Verfahren zur Herstellung einer Nahrungsmittelhülle gemäß einem oder mehreren der Ansprüche 1 bis 13, **dadurch gekennzeichnet, daß** der aus dem thermoplastischen Gemisch durch Extrusion hergestellte Schlauch blasgeformt oder biaxial streckorientiert wird.

15. Verwendung der Nahrungsmittelhülle gemäß einem oder mehreren der Ansprüche 1 bis 13 als künstliche Wursthülle, bevorzugt für Rohwurst.

## Claims

1. A food casing made of a thermoplastic mixture which comprises at least one aliphatic polyamide and/or copolyamide and/or at least one aliphatic and/or partly aromatic copolyamide containing glycol and/or polyglycol units, wherein the mixture comprises at least one inorganic and/or organic filler, the casing having a maximum depth of roughness Rₘₐₓ, determined as specified in DIN 4768, of from 7 to 60 µm and a water vapor permeability, determined as specified in DIN 53122, of at least 50 g/m²·d.

2. The food casing as claimed in claim 1, wherein it has a water vapor permeability determined as specified in DIN 53 122 of from 100 to 1100 g/m²·d.

3. The food casing as claimed in claim 1 or 2, wherein the (co)polyamide is nylon 6, nylon 66, nylon 6/66, nylon 6/10, nylon 6/12 or nylon 12.

4. The food casing as claimed in claim 1, wherein the aliphatic and/or partly aromatic copolyamide containing glycol and/or polyglycol units has
a) at least one amide part having units
a1) of at least bifunctional aliphatic and/or cycloaliphatic amines and of at least bifunctional aliphatic and/or cycloaliphatic and/or aromatic carboxylic acids, or
a2) of aliphatic aminocarboxylic acids or lactams thereof or
a3) mixtures of a1) and a2) and
b) at least one glycol or polyglycol part containing units
b1) of an at least bifunctional aliphatic and/or cycloaliphatic alcohol having from 2 to 15 carbon atoms, in particular from 2 to 6 carbon atoms, or
b2) of at least one oligoglycol or polyglycol of one of the alcohols specified in b1) or
b3) of at least one aliphatic oligoglycol or polyglycol of the type specified in b2) the terminal hydroxyl groups of which are replaced by amino groups or
b4) of a mixture of b1), b2) and/or b3) or
b5) of an ester-containing polyglycol part formed from at least bifunctional aliphatic alcohols and at least divalent aliphatic, cycloaliphatic and/or aromatic dicarboxylic acids or
b6) of a mixture of b1), b2) and/or b5).

5. The food casing as claimed in claim 1, wherein the thermoplastic mixture comprises a mixture of (co)polyamide and polyether block amide, the content of (co)polyamide being from 10 to 99 % by weight, preferably from 15 to 90 % by weight, and the content of polyether block amide being from 1 to 90 % by weight, preferably from 10 to 85 % by weight, in each case based on the total weight of said polymers in the thermoplastic mixture.

6. The food casing as claimed in one of more of claims 1 to 5, wherein the content of the (co)polyamide, the polyether block amide or the mixture of both is in general from 50 to 99 % by weight, preferably from 60 to 98 % by weight, in each case based on the total weight of the thermoplastic mixture.

7. The food casing as claimed in one of more of claims 1 to 6, wherein the organic filler is a carbohydrate, preferably a natural polysaccharide and/or a derivative thereof, a branched or crosslinked polysaccharide and/or a derivative thereof.

8. The food casing as claimed in one of more of claims 1 to 7, wherein the inorganic filler consists of glass fibers, glass filaments, glass staple fibers, glass microbeads, mineral wool fibers, carbon fibers, zeolites, quartz, aluminum silicate hollow beads, silicon dioxide, barium sulfate, calcium sulfate, calcium carbonate, aluminum hydroxide, magnesium carbonate, titanium dioxide, talc, clay and/or mica.

9. The food casing as claimed in one of more of claims 1 to 8, wherein the filler is highly swellable, preferably a sulfate-, carboxylate- or phosphate- containing substance or a substance comprising quaternary ammonium salts or an organic thickener, a modified organic natural substance, an inorganic thickener, a fully synthetic thickener or a superabsorbent based on polyacrylate or polymethacrylate.

10. The food casing as claimed in one of more of claims 1 to 9, wherein the content of the filler is from 1 to 50 % by weight, preferably from 1 to 35 % by weight, particularly preferably from 2 to 30 % by weight, in each case based on the total weight of the thermoplastic mixture.

11. The food casing as claimed in one of more of claims 1 to 10, wherein its surface has a maximum roughness depth Rₘₐₓ (determined as specified in DIN 4768) of from 10 to 50 µm, preferably from 14 to 48 µm, a mean roughness parameter Ra (determined as specified in DIN 4762) of from 0.8 to 10 µm, preferably from 1.2 to 7 µm, particularly preferably from 1.5 to 6.5 µm, and a mean roughness depth Rz (determined as specified in DIN 4768) of from 4 to 45 µm, preferably from 7 to 35 µm, particularly preferably from 8 to 32 µm.

12. The food casing as claimed in one of more of claims 1 to 11, wherein it additionally comprises a plasticizer, preferably dimethyl sulfoxide, butane-1,3-diol, glycerol, water, ethylene glycol, butylene glycol, diglyceride, diglycol ether, formamide, N-methylformamide, N,N-dimethylformamide, N,N-dimethylurea, N,N-dimethylacetamide, N-methylacetamide, poly(alkylene oxide), glycerol mono-, di- or triacetate, sorbitol, erythritol, mannitol, gluconic acid, galacturonic acid, glucaric acid, glucuronic acid, polyhydroxycarboxylic acids, glucose, fructose, sucrose, citric acid, citric acid derivatives, or poly(vinyl alcohol).

13. The food casing as claimed in claim 12, wherein the content of plasticizer is up to 30 % by weight, preferably up to 20 % by weight, particularly preferably from 2 to 20 % by weight, in each case based on the total weight of the thermoplastic mixture.

14. A process for producing a food casing as claimed in one or more of claims 1 to 13, which comprises blow-forming or biaxially orienting the tube produced from the thermoplastic mixture by extrusion.

15. The use of the food casing as claimed in one or more of claims 1 to 13 as artificial sausage casing, preferably for uncooked sausage.

## Revendications

1. Enveloppe alimentaire à base d'un mélange thermoplastique qui comprend au moins un polyamide aliphatique et/ou un co-polyamide et/ou au moins un co-polyamide aliphatique et/ou partiellement aromatique comprenant des unités de glycol et/ou de polyglycol, **caractérisée en ce que** le mélange comprend au moins une charge anorganique et/ou organique et l'enveloppe présente une rugosité maximale Rₘₐₓ, déterminée selon la norme DIN 4768, de 7 à 60 µm et une perméabilité à la vapeur d'eau, déterminée selon la norme DIN 53122, d'au moins 50 g/m².d.

2. Enveloppe alimentaire selon la revendication 1, **caractérisée en ce qu'**elle présente une perméabilité à la vapeur d'eau, déterminée selon la norme DIN 53 122, de 100 à 1 100 g/m².d.

3. Enveloppe alimentaire selon la revendication 1 ou 2, **caractérisée en ce que** le (co)polyamide est le PA-6, le PA-66, le PA-6/66, le PA-6/10, le PA-6/12 ou le PA-12.

4. Enveloppe alimentaire selon la revendication 1, **caractérisée en ce que** le co-polyamide aliphatique et/ou partiellement aromatique présentant des unités de glycol et/ou de polyglycol présente
a) au moins une proportion d'amide avec des unités
a1) à base d'au moins d'amines aliphatiques et/ou cyclo-aliphatiques bifonctionnelles et au moins d'acides carboxyliques aliphatiques et/ou cyclo-aliphatiques et/ou aromatiques bifonctionnels, ou
a2) à base d'acides amino-carboxyliques aliphatiques ou de leurs lactames, ou
a3) à base de mélanges des produits des points a1) et a2) et
b) au moins une proportion de glycol ou polyglycol avec des unités
b1) à base d'au moins d'un alcool aliphatique et/ou cyclo-aliphatique bifonctionnel comportant 2 à 15 atomes de carbone, en particulier 2 à 6 atomes de carbone, ou
b2) à base d'au moins d'un oligoglycol ou polyglycol constitué de l'un des alcools cités au point b1) ou
b3) à base d'au moins d'un oligoglycol ou polyglycol du type cité au point b2) dont les groupes hydroxy terminaux sont substitués par des groupes amino, ou
b4) à base d'un mélange des produits des points b1), b2) et/ou b3), ou
b5) à base d'une partie polyglycolique contenant des esters, formée au moins d'alcools aliphatiques bifonctionnels et au moins d'acides dicarboxyliques aliphatiques, cyclo-aliphatiques et/ou aromatiques bivalents, ou
b6) à base d'un mélange des produits des points b1), b2) et/ou b5).

5. Enveloppe alimentaire selon la revendication 1, **caractérisée en ce que** le mélange thermoplastique contient un mélange de (co)polyamide et de polyéther-bloc-amide, la proportion en (co)polyamide étant de 10 à 99 % en poids, de préférence de 15 à 90 % en poids et la proportion de polyéther-bloc-amide étant de 1 à 90 % en poids, de préférence de 10 à 85 % en poids, respectivement par rapport au poids total des polymères cités dans le mélange thermoplastique.

6. Enveloppe alimentaire selon une ou plusieurs des revendications 1 à 5, **caractérisée en ce que** la proportion de (co)polyamide, de polyéther-bloc-amide ou du mélange des deux est en général de 50 à 99 % en poids, de préférence de 60 à 98 % en poids, respectivement, par rapport au poids total du mélange thermoplastique.

7. Enveloppe alimentaire selon une ou plusieurs des revendications 1 à 6, **caractérisée en ce que** la charge organique est un hydrate de carbone, de préférence un polysaccharide naturel et/ou un dérivé de celui-ci, un polysaccharide ramifié ou réticulé et/ou un dérivé de celui-ci.

8. Enveloppe alimentaire selon une ou plusieurs des revendications 1 à 7, **caractérisée en ce que** la charge anorganique est constituée de fibres de verre, de filaments de verre, de fibres de verre discontinues, de microbilles de verre, de fibres de laine minérale, de fibres de carbone, de zéolithes, de quartz, de billes creuses de silicate d'aluminium, de dioxyde de silicium, de sulfate de baryum, de sulfate de calcium, de carbonate de calcium, d'hydroxyde d'aluminium, de carbonate de magnésium, de dioxyde de titane, d'argile et/ou de mica.

9. Enveloppe alimentaire selon une ou plusieurs des revendications 1 à 8, **caractérisée en ce que** la charge est hautement susceptible de gonfler et est de préférence une substance contenant des groupes sulfate, carboxylate ou phosphate ou une substance contenant des sels d'ammonium quaternaire ou un agent épaississant organique, une substance naturelle organique modifiée, un agent épaississant anorganique, un agent épaississant entièrement synthétique ou un super-absorbant à base de polyacrylate ou polyméthacrylate.

10. Enveloppe alimentaire selon une ou plusieurs des revendications 1 à 9, **caractérisée en ce que** la proportion de charge est de 1 à 50 % en poids, de préférence de 1 à 35 % en poids, de manière particulièrement préférée, de 2 à 30 % en poids, respectivement par rapport au poids total du mélange thermoplastique.

11. Enveloppe alimentaire selon une ou plusieurs des revendications 1 à 10, **caractérisée en ce que** leur surface présente une rugosité maximale Rₘₐₓ (déterminée selon la norme DIN 4768) de 10 à 50 µm, de préférence de 14 à 48 µm, une valeur de rugosité intermédiaire Ra (déterminée selon la norme DIN 4762) de 0,8 à 10 µm, de préférence de 1,2 à 7 µm, de manière particulièrement préférée de 1,5 à 6,5 µm, et une moyenne de rugosité (déterminée selon la norme DIN 4768) de 4 à 45 µm, de préférence de 7 à 35 µm, de manière particulièrement préférée de 8 à 32 µm.

12. Enveloppe alimentaire selon une ou plusieurs des revendications 1 à 11, **caractérisée en ce qu'**elle contient en outre un agent plastifiant, de préférence du diméthylsulfoxyde, du butane-1,3-diol, de la glycérine, de l'eau, de l'éthylène-glycol, du butylène-glycol, un diglycéride, du diglycoléther, du formamide, du N-méthyl-formamide, du N,N-diméthylformamide, de la N,N-diméthylurée, du N,N-diméthylacétamide, du N-méthyl-acétamide, de l'oxyde de polyalkylène, du mono-, di- ou tri-acétate de glycérine, du sorbitol, de l'érythritol, du mannitol, de l'acide gluconique, de l'acide galacturonique, de l'acide glucarique, de l'acide glucuronique, des acides polyhydrocarboxyliques, du glucose, du fructose, du saccharose, de l'acide citrique, des dérivés d'acide citrique ou de l'alcool polyvinylique.

13. Enveloppe alimentaire selon la revendication 12, **caractérisée en ce que** la teneur en agent plastifiant va jusqu'à 30 % en poids, de préférence jusqu'à 20 % en poids, de manière particulièrement préférée, de 2 à 20 % en poids, respectivement, par rapport au poids total du mélange thermoplastique.

14. Procédé de fabrication d'une enveloppe alimentaire selon une ou plusieurs des revendications 1 à 13, **caractérisé en ce que** le tube produit par extrusion à partir du mélange thermoplastique est formé par soufflage ou est étiré biaxialement.

15. Utilisation de l'enveloppe alimentaire selon une ou plusieurs des revendications 1 à 13 comme enveloppe de saucisse artificielle, de préférence pour une saucisse à base de viande crue, de type « Rohwurst ».
